# EUROPEAN PATENT APPLICATION

(11) **EP 2 360 626 A1**
(43) Date of publication of application: **24.08.2011**
(21) Application number: 11151981.5
(22) Date of filing: 25.01.2011
(51) Int. Cl.: G06K 19/07, G07F 7/10

(54) **Portable electronic device, and method for controlling portable electronic device**

(30) Priority: 25.01.2010 JP 2010013572
(71) Applicant: Kabushiki Kaisha Toshiba, Tokyo 105-8001 (JP)
(72) Inventor: Takeda, Hajime, Tokyo 105-8001 (JP)
(74) Representative: HOFFMANN EITLE

(57) **Abstract**

According to one embodiment, a portable electronic device includes, a first communication module (28, 29) configured to communicate with an external device by a first communication scheme, a second communication module (28, 29) configured to communicate with the external device by a second communication scheme, a command processing module (24) configured to process commands, a determination module (24) configured to determine whether a command following a first command received by the first communication module exists or not, and a control module (24) configured to perform a control to suspend a processing for a second command received by the second communication module after receiving the first command and to wait for reception of the following command following the first command by the first communication module, if the determination module determines that the following command following the first command exists.

## Description

### FIELD

Embodiments described herein relate generally to a portable electronic device capable of performing various processings by transmitting/receiving commands, and a method for controlling the portable electronic device.

### BACKGROUND

In general, IC cards used as portable electronic devices each comprise a card-type body made of plastics, and an IC module embedded in the body. The IC module comprises an IC chip. The IC chip comprises an electrically erasable programmable read-only memory (EEPROM) and a CPU. The EEPROM can maintain data even when no power supply is provided or a non-volatile memory such as a flash ROM. The CPU performs various calculations.

IC cards have a feature that the cards are excellent in portability and are difficult to fake. Improvement in higher performance of IC chips amounted in 1C cards has accompanied practical use of an IC card of a type capable of executing plural applications stored in itself. When a command is received from a reader/writer (e.g., a terminal device) specialized for IC cards, the IC card of this type performs applications in accordance with the received command. In this manner, the IC card can perform various functions.

Further, for example, as disclosed in Jpn. Pat. Appln. KOKAI Publication No. 2009-80673 which is a Japanese patent document, an IC card which comprises plural interfaces is already popular. This IC card comprises a contact communication interface defined under ISO/IEC 7816 and a Single-Wire-Protocol (SWP) communication interface defined under ETSI TS 102 613.

The foregoing IC card comprising both the contact communication interface and the SWP communication interface can simultaneously communicate data with external terminals in parallel through the two communication interfaces.

However, the 1C card has a problem of being unable to simultaneously perform processings according to commands respectively received by the interfaces. That is, when the foregoing IC card receives commands simultaneously through both the SWP communication interface and the contact communication interface, the IC card then suspends a processing according to one of the received commands and performs a processing according to the other one of the commands.

Hence, in order to efficiently perform processings when commands are received simultaneously from plural interfaces, there may be considered a IC card provided with a priority determination scheme for determining priorities for processings. The IC card may perform processings according to commands received simultaneously from plural interfaces, in an order based on the priority determination scheme.

However, among commands to be processed by IC cards, there are chained commands which each IC card can process by combining plural commands with each other. For example, when an IC card receives one command constituting chained commands through an interface and receives another one constituting the chained commands through another interface, there is a possibility that the IC card can not efficiently perform processings according to the chained command.

### BRIEF DESCRIPTION OF THE DRAWINGS

FIG. 1 is a block diagram showing for explaingin a configuration example of a terminal device according to an embodiment of the invention;
FIG. 2 is a block diagram showing for explaingin a configuration example of an IC card shown in FIG. 1;
FIG. 3 is a chart showing for explaining commands and responses transmitted/received between the terminal device and IC card shown in FIG. 1;
FIG. 4 is a table showing for explaining an example of commands transmitted from the terminal device shown in FIG. 1 to the IC card;
FIG. 5 is a flowchart showing for explaining an example of a processing by the IC card shown in FIG. 1; and
FIG. 6 is a flowchart showing for explaining an example of a processing by the IC card shown in FIG. 1.

### DETAILED DESCRIPTION

Various embodiments according to the invention will be described hereinafter with reference to the accompanying drawings. In general, according to one embodiment of the invention, a portable electronic device comprises: a first communication module configured to communicate with an external device by a first communication scheme; a second communication module configured to communicate with the external device by a second communication scheme; a command processing module configured to process commands; a determination module configured to determine whether a command following a first command received by the first communication module exists or not; and a control module configured to perform a control to suspend a processing for a second command received by the second communication module after receiving the first command and to wait for reception of the following command following the first command by the first communication module, if the determination module determines that the following command following the first command exists.

Hereinafter, a portable electronic device and a method for controlling the portable electronic device according to the invention will be described in details with reference to the drawings.

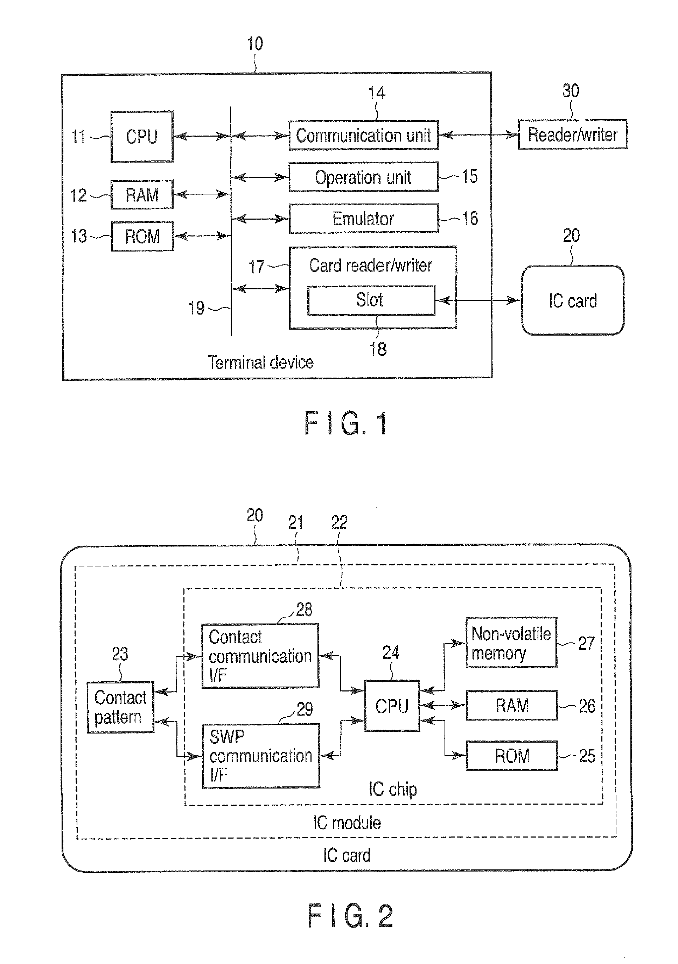

FIG. 1 is a block diagram showing for explaining a configuration example of a terminal device 10 accorcing to a first embodiment of the invention.

The terminal device 10 can transmit/receive various data to/from an IC card 20 by contact communication or SWP communication. The terminal device 10 can also transmit/receive various data to/from an external reader/writer 30 by contact communication or contactless communication. Specifically, the IC card 20 can transmit/reccive data to/from the reader/writer 30 through the terminal device 10.

As shown in FIG. 1, the terminal device 10 comprises a CPU 11, a RAM 12, a ROM 13, a communication unit 14, an operation unit 15, an emulator 16, and a card reader/writer 17. The CPU 11, RAM 12, ROM 13, communication unit 14, operation unit 15, and emulator 16, and card reader/writer 17 are connected with each other through a bus 19.

The CPU of the terminal device 10 functions as a controller which controls the whole terminal device 10. The CPU 11 performs various processings, based on a control program and control data which are stored in the ROM 13. For example, the CPU 11 transmits/receives commands and responses to/from the IC card 20 through the card reader/writer 17.

The RAM 12 is a volatile memory which functions as a working memory. The RAM 12 temporarily stores data being processed by the CPU 11. For example, the RAM 12 temporarily stores data which is transmitted/received to/from external devices through the card reader/writer 17 or communication unit 14. The RAM 12 temporarily stores a program which is executed by the CPU 11. The ROM 13 is a non-volatile memory which pre-stores a control program and control data.

The communication unit 14 is an interface which connects the terminal device 10 with external devices through or without a touch. The terminal device 10 can communicate with, for example, the external reader/writer 30 through the communication unit 14.

When the communication unit 14 makes contact-communication with the reader/writer 30, for example, the communication unit 14 comprises an interface such as a contact terminal. Alternatively, when the communication unit 14 makes contactless communication with the reader/writer 30, for example, the communication unit 14 comprises an interface such as an antenna or a data processing circuit.

The data processing circuit performs encoding, decoding, modulation, and demodulation on data received and data to be transmitted. The antenna transmits data to the reader/writer 30 by generating a magnetic field in accordance with data to be transmitted. Further, the antenna recognizes data which is transmitted from the reader/writer 30, based on an induction current generated by electromagnetic induction.

The operation unit 15 is constituted by, for example, operation keys or a touch panel formed integrally with a display unit. The operation unit 15 receives operator's operation on the terminal device 10 in form of an operation signal.

When communication is made between the IC card 20 and the external reader/writer_ 30, the emulator 16 converts protocols of data. For example, the IC card 20 and terminal device 10 are supposed to transmit/receive data by the SWP communication, and the reader/writer 30 and terminal device 10 are supposed to transmit/receive data by contactless communication defined under ISO/IEC14443. On this supposition, the emulator 16 converts protocols of data received and data to be transmitted, into protocols compatible with the SWP communication and protocols compatible with the contactless communication.

The card reader/writer 17 is an interface device for communicating with the 1C card 20. The card reader/writer 17 comprises a slot 18 into which the IC card 20 is inserted. Further, the card reader/writer 17 comprises plural contact terminals to be connected with a contact pattern which the IC card 20 comprises.

When the IC card 20 is inserted in the slot 18, the plural contact terminals of the card reader/writer 17 are connected to the contact pattern of the IC card 20. The terminal device 10 and IC card 20 are thereby electrically connected to each other. The card reader/writer 17 supplies electric power and a clock for the IC card 20, performs a reset control for the IC card 20, and transmits/receives data to/from the IC card 20.

The CPU 11 inputs various commands to the IC card 20 by the card reader/writer 17. When the IC card 20 receives a data write command from the card reader/writer 17, the IC card 20 performs a processing of writing received data into an internal non-volatile memory.

Further, the CPU 11 reads data from the IC card 20 by transmitting a read command to the IC card 20. The CPU 11 performs various processings, based on data received from the IC card 20.

FIG. 2 is a block diagram showing for explaining a configuration example of the IC card 20 shown in FIG. 1.

As shown in FIG. 2, the IC card 20 comprises an IC module 21 included in a body of a card-type body. The IC module 21 comprises IC chip 22, and a contact pattern 23 as a communication unit. The at least one IC chip 22 and the contact pattern 23 are formed on the IC module 21, connected to each other.

The contact pattern 23 is formed of electrically conductive metal on a surface of the IC module 21. That is, the contact pattern 23 is formed to be capable of making contact with external devices. The contact pattern 23 is formed by dividing a surface formed of metal into plural areas. The divided areas respectively function as terminals of the contact pattern 23.

The IC chip 22 comprises a CPU 24, a ROM 25, a RAM 26, a non-volatile memory 27, a contactless communication interface 28, and a SWP communication interface 29.

The CPU 24 functions as a control module configured to control the whole IC card 20. The CPU 24 functions as a determination unit which makes various determinations. The CPU 24 performs various processings, based on a control program and control data which are stored in the ROM 25 or non-volatile memory 27. For example, the CPU 24 performs various processings in accordance with commands received from the card reader/writer 17 of the terminal device 10, and generates data such as responses as processing results. That is, the CPU 24 functions as a command processing module.

The ROM 25 is a non-volatile memory which pre-stores a control program and control data. The ROM 25 is built in the IC card 20 with the control program and control data pre-stored in a manufacturing process. That is, the control program and control data stored in the ROM 25 are built in advance in accordance with specs of the 1C card 20.

The RAM 26 is a volatile memory which functions as a working memory. The RAM 26 temporarily stores data being processed by the CPU 24. For example, the RAM 26 temporarily stores data to be transmitted to and data received from the terminal device 10 through the contact pattern 23. The RAM 26 also temporarily stores a program which the CPU 24 executes.

The non-volatile memory 27 is constituted by a non-volatile memory such as an EEPROM or a flash ROM which can write and rewrite data. The non-volatile memory 27 stores a control program and various data in accordance with a use application of the 1C card 20.

For example, the non-volatile memory 27 creates a program file and a data file. A control program and various data are respectively written into the created files. The CPU 24 can perform various processings by performing a program stored in the non-volatile memory 27 or ROM 25.

The contact communication interface 28 transmits/receives data to communicate with the card reader/writer 17. The contact communication interface 28 functions as a contactless communication interface defined under ISO/IEC7816. The contactless communication interface 28 is connected between a predetermined terminal (first terminal) of the contact pattern 23 and the CPU 24. That is, the CPU 24 can perform contactless communication by transmitting/receiving data to/from the terminal device 10 by using the contactless communication interface 28.

The SWP communication interface 29 transmits/receives data to communicate with the card reader/writer 17. The SWP communication interface 29 functions as, for example, a communication interface for making the SWP communication defined under ETS 102 613. The SWP communication interface 29 is connected between a predetermined terminal (second terminal) of the contact pattern 23 and the CPU 24. That is, the CPU 24 can transmit/receive data to/from the terminal device 10 by using the SWP communication interface 29. The contactless communication interface 28 and SWP communication interface 29 function as first and second communication module, respectively.

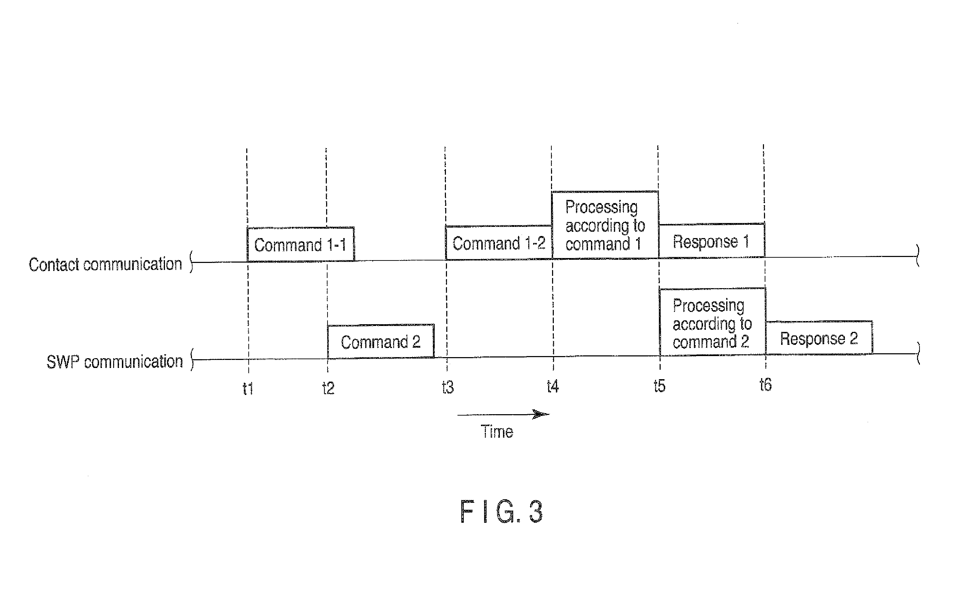

FIG. 3 is a chart showing for explaining commands and responses transmitted/received between the terminal device 10 and IC card 20 shown in FIG. 1. The longitudinal axis indicates time which progresses from the left to the right of the chart.

Commands 1-1 and 1-2 shown in FIG. 3 are transmitted from the terminal device 10 to the IC card 20. That is, the IC card 20 receives commands 1-1 and 1-2 through the contactless communication interface 28.

The commands 1-1 and 1-2 are chained commands. Therefore, when the IC card 20 receives both of the commands 1-1 and 1-2, the IC card 20 can perform a processing according to a command 1.

A command 2 is transmitted by the SWP communication from the terminal device 10 to the IC card 20. That is, the IC card 20 receives the command 2 through the SWP communication interface 29.

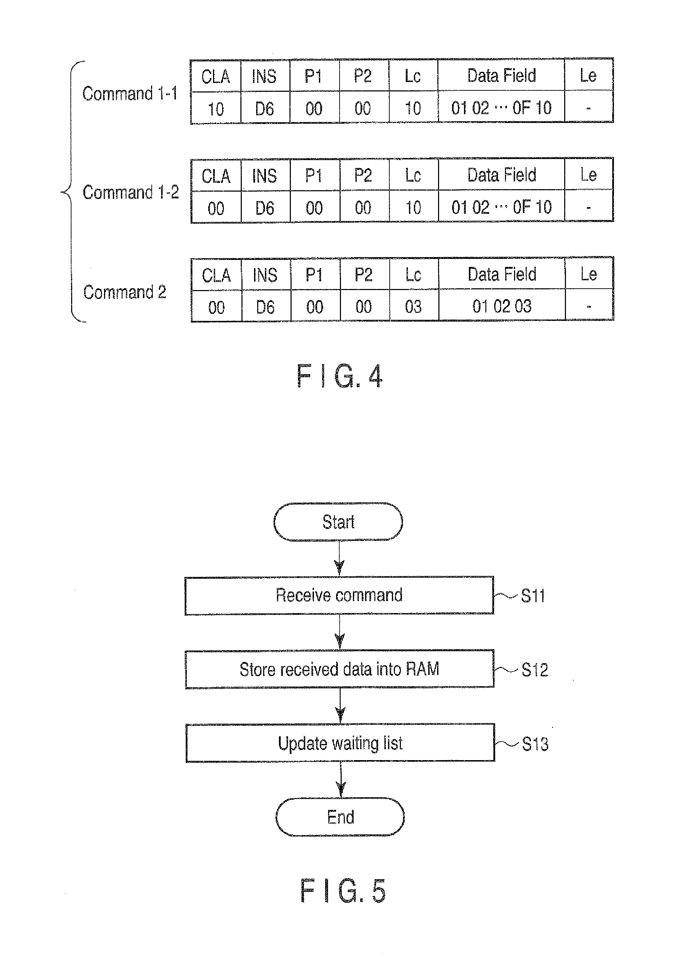

FIG. 4 is a table showing for explaining examples of the commands 1-1, 1-2, and 2 described above.

As shown in FIG. 4, each of the commands includes information such as class byte "CLA", a command type "INS", parameters "P1 and "P2", a data field length "Lc", a data field "Data", and an expected data length "Le".

For example, when chained commands are transmitted with a part of the chained commands transmitted later as a follower, the terminal device 10 transmits a command having "10" as "CLA" to the IC card 20.

The IC card 20 checks "CLA" of a received command. When the "CLA" is "10", the received command is recognized as a part of chained commands chained to a following command.

As shown in FIG. 4, the "CLA" of the command 1-2 is "10". Therefore, when the IC card 20 receives the command 1-1, the IC card 20 recognizes that a following command exists.

Alternatively, the "claim of the command 1-2 is "00". In this case, the IC card 20 recognizes that no following command exists. Further, the IC card 20 chains the command 1-2 to the command 1-1 received first.

Further, "CLA" of the command 2 is "00" . In this case, the IC card 20 recognizes that no following command exists.

A description will now be made along the example shown in FIG. 3. The IC card 20 starts receiving the command 1-1 at a timing t1 through the contactless Communication interface 28. The CPU 24 of the IC card 20 temporarily stores the received command 1-1 into the RAM 26. The CPU 24 checks "CLA" of the received command 1-1 and determines whether a following command exists or not. In this case, the CPU 24 functions as a determination module. If a following command exists, the CPU 24 transits to a state of waiting for reception of the following command by contact communication.

In this case, the CPU 24 creates a "follower waiting flag" and an "interface flag" in order to control transition of states.

The follower waiting flag is information indicating whether or not the CPU 24 of the IC card 20 is in a state of waiting for a following command to follow an already received command. That is, if "CLA" of the received command is "10", the CPU 24 sets the follower waiting flag to ON. Otherwise, if the "CLA" of the received command is "00", the CPU 24 sets the follower waiting flag to OFF.

The interface flag is information which indicates a communication scheme of a following command to wait for. Specifically, the CPU 24 determines which interface has received a command whose "CLA" is "10". The CPU 24 then controls an interface flag in accordance with the determination.

If an interface which has received the command having "10" as "CLA" is the contact communication interface 28, the CPU 24 registers information indicating contact communication (for example, "1") as an interface flag. Otherwise, if the interface which has received the command having "10" as "CLA" is the SWP communication interface 29, the CPU 24 registers information indicating SWP communication as an interface flag (for example, "0").

As has been described above, "CLA" of the command 1-1 is "10", and therefore, the CPU 24 transits to a state of waiting for a following command to follow the command 1-1. That is, the CPU 24 turns on the "follower waiting flag" and registers "1" as the "interface flag".

Further, the IC card 20 starts receiving the command 2 by the SWP communication interface 29 at a timing t2. The CPU 24 of the IC card 20 temporarily stores the received command 2 into the RAM 26. The CPU 24 checks "CLA" of the received command 2, and determines whether a following command exists or not.

Since the "CLA" of the command 2 is "00" as described above, the CPU 24 recognizes that no following command which follows the command 2 exists. Further, the CPU 24 maintains a state of waiting for a following command for the previously received command 1-1. Therefore, the CPU 24 suspends a processing according to the command 2.

The IC card 20 starts receiving the command 1-2 by the contact communication interface 28 at a timing t3. The CPU 24 of the IC card 20 temporarily stores the received command 1-2 into the RAM 26.

If the "follower waiting flag" is ON, the CPU 24 determines whether a communication scheme indicated by the "interface flag" corresponds to a communication scheme of a received command or not. If the communication scheme indicated by the "interface flag" corresponds to the communication scheme of the received command, the CPU 24 recognizes the received command to be a following command.

In this example, the "interface flag" indicates the contact communication scheme, and the communication scheme of the received command is also the contact communication scheme. Therefore, the CPU 24 recognizes that the command 1-2 is a following command which follows the commands 1-1.

The CPU 24 of the IC card 20 checks "CLA" of the received command 1-2 and determines whether a further following command exists or not. Since the "CLA" of the command 1-2 is "00", as described above, the CPU 24 recognizes that no further following command to follow the command 1-2 exists.

The CPU 24 starts processing according to the received commands 1-1 and 1-2 at a timing t4. The CPU 24 generates a command 1 by chaining the commands 1-1 and 1-2 stored in the RAM 26. The CPU 24 executes a processing according to the generated command 1, and generates a response 1. The CPU 24 transmits the generated response 1 to the terminal device 10 at a timing t5 by contact communication.

Also at the timing t5, the CPU 24 starts the processing according to the command 2 which has been suspended. That is, the CPU 24 performs the processing according to the command 2, and generates a response 2. The CPU 24 transmits the generated response 2 to the terminal device 10 at a timing t6 by SWP communication.

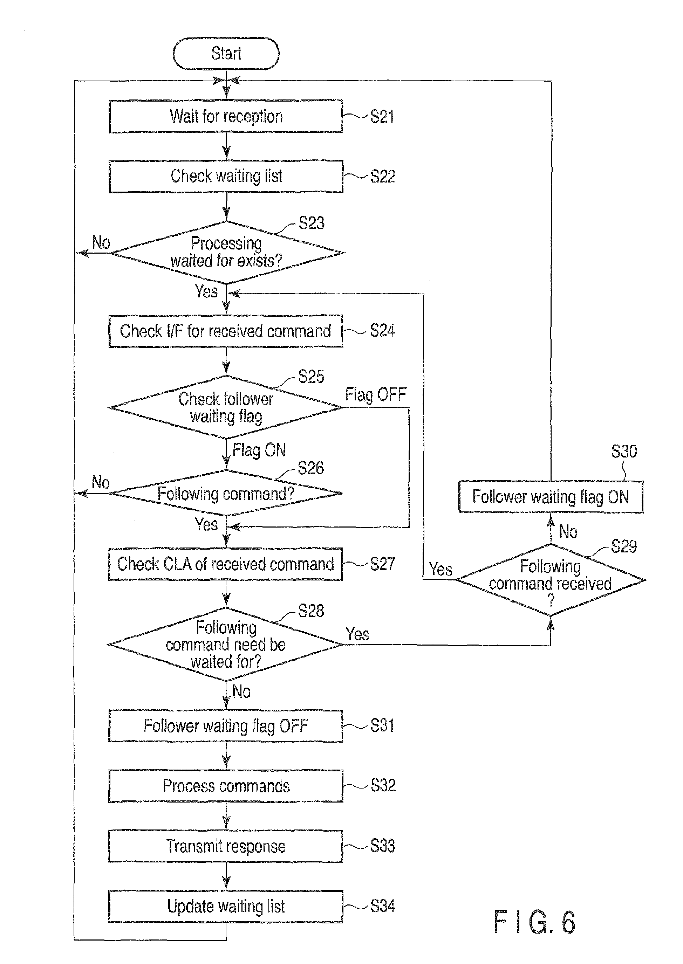

FIGS. 5 and 6 are flowcharts showing for explaining examples of processings by the IC card 20 shown in FIG. 1. FIG. 5 is a flowchart explaining an update processing of a waiting list. FIG. 6 is a flowchart explaining a determination in a processing in response to a received command.

As shown in FIG. 5, when the CPU 24 of the IC card 20 receives a command from the terminal device 10 through any of the contact communication interface 28 and SWP communication interface 29 (step S11) the CPU 24 then stores data of the received command into the RAM 26 (step S12). The CPU 24 creates (or updates) a waiting list in the RAM 26 or non-volatile memory 27 (step S13).

When the CPU 24 receives a command, the CPU 24 then generates an index associated with the command. The CPU 24 generates information indicating the generated index and a storage location of the received command, and registers the index and information in the waiting list.

Further, the CPU 24 updates the "follower waiting flag" and "interface flag" in accordance with a communication scheme and a value of "CLA" of the received command.

When the CPU 24 receives a command by either contact communication or SWP communication, the CPU 24 performs the update processing of the waiting list as described above.

The CPU 24 determines a processing in response to the received command, based on the waiting list created by the processing as described above.

After establishing an initial negotiation for each of the contact communication and SWP communication, the IC card 20 transits to a state of waiting for reception of a command from the terminal device 10 (step S21). Further, the CPU 24 checks the waiting list (step S22). The CPU 24 determines whether a processing being waited for exists or not. That is, the CPU 24 determines whether unchecked information registered in the waiting list exists or not (step S23), If no processing being waited for is registered in the waiting list (NO in step S23), the CPU 24 transits to the step S21 and maintains the state of waiting for reception of a command.

If unchecked information is registered in the waiting list, the CPU 24 determines that a command has newly been received. If unchecked information is thus registered in the waiting list (YES in step S23), the CPU 24 checks which interface has received a command having an unchecked index (step S24). That is, the CPU 24 checks whether an interface which has newly received a command is the contact communication interface 28 or the SWP communication interface 29.

Further, the CPU 24 checks the "follower waiting flag" (step S25). If the "follower waiting flag" is ON, the CPU 24 determines whether or not the newly received command is a following command following an already received command (step S26). That is, the CPU 24 determines whether a communication scheme of the newly received command and a communication scheme indicated by the "interface flag" are identical to each other or not. If the communication schemes of the newly received command and the "interface flag" are identical, the CPU 24 determines that the newly received command is a following command following the already received command.

If the newly received command is determined to be not a following command following an already received command (NO in step S26), the CPU 24 goes to the step S21, i.e., a state of waiting for registration of a new index into the waiting list.

If the newly received command is a following commands following an already received command (YES in step S26) or if the "follower waiting flag" is checked to be OFF, the CPU 24 checks "CLA" of the newly received command (step S27). In this manner, the CPU 24 determines whether or not reception of a further following command which follows the newly received command need be waited for (step S28).

If the CPU 24 determines that reception of a following command need be waited for (YES in step S28), the CPU 24 determines whether or not a following command has been received between the step S23 and the step S28 (step S29).

If no following command is determined to have been received (NO in step S29), the CPU 24 sets the "follower waiting flag" to ON (step S30) and loops back to the step S21. The CPU 24 thereby transits to a state of waiting for reception of a following command.

If a following command is determined to have been received in the step S29 (YES in step S29), the CPU 24 makes determinations again in the steps S24 to S28, based on the newly received command.

If the CPU 24 determines in the step S28 that reception of a following command need not be waited for (NO in step S28), the CPU 24 determines that reception of the chained commands is complete. In this case, the CPU 24 controls the "follower waiting flag" to be set to OFF (step S31).

The CPU 24 performs a processing according to the received command and creates a response (step S32). If commands to be processed are chained commands, the CPU 24 chains the received commands to each other and performs a processing according to the chained commands. The CPU 24 then generates a response. The CPU 24 transmits the generated response to the terminal device 10 (step S33), and deletes indices corresponding to the processed commands (step S34) . The CPU 24 then loops back to the step S21.

As described above, the IC card 20 according to the present embodiment comprises plural communication interfaces. When the IC card 20 receives a command, the IC card 20 then determines whether a following command to follow the received command exists or not. If a following command exists, the IC card 20 generates information indicating a state of waiting for a following command and information indicating a communication interface to wait for the following command. In this manner, the 1C card 20 maintains a state of more prioritizing reception of a following command than a command received through any other communication interface.

When the 1C card 20 receives a command, the IC card 20 then determines whether the received command is a following command following an already received command. If the received command is a following command following an already received command, the 1C card 20 chains the already received command and a newly received commands to each other, and performs a corresponding processing. Accordingly, even a command divided into plural commands can be processed efficiently.

For example, if a command received by a communication interface is in a chaining state which requires a following command and if another command is received by another communication interface before receiving the following commands, the IC card 20 prioritizes a state of waiting for reception of the following command to follow the command received first.

Upon completion of receiving the following command, the IC card 20 performs a processing according to the command received first. Further, after completion of the processing of the command received first, the IC card 20 performs a processing according to the command received by the another communication interface. In this manner, the IC card 20 can perform command processings in an order of receiving commands. As a result, there are provided a portable electronic device capable of more efficiently performing processings, and a method for controlling the portable electronic device.

While certain embodiments have been described, these embodiments have been presented by way of example only, and are not intended to limit the scope of the Inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic device comprising:
a first communication module (28, 29) configured to communicate with an external device by a first communication scheme;
a second communication module (28, 29) configured to communicate with the external device by a second communication scheme;
a command processing module (24) configured to process commands;
a determination module (24) configured to determine whether a command following a first command received by the first communication module exists or not; and
a control module (24) configured to perform a control to suspend a processing for a second command received by the second communication module after receiving the first command and to wait for reception of the following command following the first command by the first communication module, if the determination module determines that the following command following the first command exists.

2. The portable electronic device of claim 1, **characterized in that**
the determination module turns on a follower waiting flag indicating waiting for the following command if the determination module determines that the
following command following the first command exists,
and
the control module controls the command processing module to suspend the processing for the second command received by the second communication module if the follower waiting flag is ON.

3. The portable electronic device of claim 2, **characterized in that**
the determination module sets an interface flag indicating a communication scheme of the first command for which the following command is determined to exist, with the interface flag associated with the first command for which the following command is waited, and
the control module determines that the command following the first command has been received if a command is received by the first or second communication module, if the follower waiting flag is ON, and if the communication scheme indicated by the interface flag and a communication scheme of the received command are identical to each other.

4. The portable electronic device of claim 3, **characterized in that** if the control module determines that the command following the first command has been received, the control module controls the command processing module to chain the first command with the following command and to process the chained commands.

5. The portable electronic device of claim 4, **characterized in that** the control module controls the command processing module to process the second command after completion of processing of the chained commands.

6. The portable electronic device of one of claims 1 to 5, **characterized by** further comprising:
an IC module (21) comprising, as components, the first communication module, second communication module, command processing module, determination module, and control module; and
a body (20) in which the IC module is located.

7. A method for controlling a portable electronic device comprising a first communication module (28, 29) configured to communicate with an external device by a first communication scheme, a second communication module (28, 29) configured to communicate with the external device by a second communication scheme, and a command processing module configured to process commands, the method comprising:
determining whether a command following a first command received by the first communication module exists or not; and
performing a control to suspend a processing for a second command received by the second communication module after receiving the first command and to wait for reception of the following command following the first command by the first communication module, if the following command following the first command is determined to exist.
